**Europäisches Patentamt**

**European Patent Office**

**Office européen des brevets**

(11) Veröffentlichungsnummer: **0 433 450 A1**

# EUROPÄISCHE PATENTANMELDUNG
## veröffentlicht nach Art. 158 Abs. 3
### EPÜ

(21) Anmeldenummer: 89907375.3

(22) Anmeldetag: **29.03.89**

(86) Internationale Anmeldenummer:
**PCT/SU89/00081**

(87) Internationale Veröffentlichungsnummer:
**WO 90/11249 (04.10.90 90/23)**

(51) Int. Cl.5: **C01B 13/14, C01G 1/02**

(43) Veröffentlichungstag der Anmeldung:
**26.06.91 Patentblatt 91/26**

(84) Benannte Vertragsstaaten:
**AT CH DE FR GB IT LI NL SE**

(71) Anmelder: **INSTITUT STRUKTURNOI MAKROKINETIKI AKADEMII NAUK SSSR Moskovskaya oblast Poselok Chernogolovka 142432(SU)**

(72) Erfinder: **MERZHANOV, Alexandr Grigorievich ul. Tretya, 3-2 Moskovskaya obl. pos. Chernogolovka, 142432(SU)**
Erfinder: **BOROVINSKAYA, Inna Petrovna ul. Tretya, 3-2**

**Moskovskaya obl.
pos. Chernogolovka, 142432(SU)**
Erfinder: **NERSESIAN, Mikael Davidovich Institutsky pr.,
4-120 Moskovskaya obl.
pos. Chernogolovka, 142432(SU)**
Erfinder: **LYSIKOV, Sergei Vladimirovich ul. Pervaya, 2-15
Moskovskaya obl.
pos. Chernogolovka, 142432(SU)**

(74) Vertreter: **von Füner, Alexander, Dr. et al Patentanwälte v. Füner, Ebbinghaus, Finck Mariahilfplatz 2 & 3 Postfach 95 01 60 W-8000 München 95(DE)**

(54) **VERFAHREN ZUR HERSTELLUNG VON KOMPLEXEN OXIDEN.**

(57) Das Verfahren zur Gewinnung zusammengesetzter Oxide auf der Grundlage von mindestens zwei Metallen der I.-VI. Gruppe des Periodensystems sieht das Vermischen einer Brenn-und einer Oxidkomponente sowie eines Oxydationsmittels und dann die Wärmebehandlung des zubereiteten Gemisches bis zum Anfallen des Endproduktes vor. Die Komponenten werden in einem Verhältnis vermischt, welches die Gewinnung eines Endproduktes mit stöchiometrischer Zusammensetzung gewährleistet. Die Wärmebehandlung wird mit gerichteter Flammenführung unter Zuhilfenahme der selbstverbreitenden Hochtemperatursynthese im Sauerstoff beziehungsweise in einem sauerstoffhaltigen Gasmedium durchgeführt.

Die Erfindung kann, beispielsweise, in der elektrotechnischen Industrie angewendet werden.

EP 0 433 450 A1

# VERFAHREN ZUR GEWINLUNG VON ZUSAMMENGESETZTEN OXIDEN

Gebiet der Technik

Die vorliegende Erfindung bezieht sich auf daß Gebiet der anorganischen Chemie und insbesondere auf ein Verfahren zur Gewinnung zusammengesetzter Oxide auf der Grundlage von mindestens zwei Metallen der I. - VI. Gruppe des Periodensystems und kann, beispielsweise, in der elektrotechnischen, radioelektronischen Industrie, im Juweliergewerbe und in der Lasertechnik angewendet werden.

Zugrundeliegender Stand der Technik

Bekannt ist ein Verfahren zur Gewinnung zusammengesetzter Oxide der allgemeinen Formel $(A_2B_{1-x})$-$Nb_2O_6$, (worin A - ein Alkalimetall Na, K oder ihr Gemisch ist, B - ein Metall, gewählt aus der Gruppe, die Pb, Cd oder ihr Gemisch enthält, ist, das die Zubereitung eines stöchiometrischen Gemisches: eines Oxids ($Na_2O$, $K_2O$ oder ihres Gemisches, PbO, CdO oder ihres Gemisches und $Nb_2O_5$) und eines Chlorids (NaCl oder KCl), die Auflösung des genannten Gemisches im Wasser, Verdampfung von Wasser bei 473 K bis zum Anfallen einer Trockensubstanz innerhalb von 3 Stünden, die Hochtemperaturerhitzung der Trockensubstanz bei 1273 K während 60 Minuten mit anschließender Ausscheidung des Produktes, beispielsweise folgender Zusammensetzung $Na_{1,5}Pb_{0,25}Nb_2O_6$, vorsieht (US, A, 4234436).

Das bekannte Verfahren ist langwierig und besteht aus mehreren Stufen.

Bekannt ist auch ein Verfahren zur Gewinnung von zusammengesetzten Oxiden auf der Grundlage eines Metalls der I. und V. Gruppe des Periodensystems (Niobate eines Alkalimetalls das die Zubereitung eines Gemisches aus Oxid eines der Alkalimetalle (Na, K, Li), $Nb_2O_5$ und NaCl oder KCl), die Zugabe von Wasser dem Gemisch und Verdampfung desselben bei 473 K bis zum Anfallen einer Trockensubstanz und die Erhitzung derselben bei 1273 K während 60 Minuten mit anschlissender Ausscheidung des Fertigproduktes und seinem Glühen bei 773 K wührend 3 Stunden vorsient (US, A, 4234557).

Das genannte Verfahren besteht aus mehreren Stufen, ist langwierig und demzufolge wenigproduktiv.

Bekannt ist ebenfalls ein Verfahren zur Gewinnung von zusammengesetzten Oxiden auf der Grundlage von Metallen der II.-V. Gruppe des Periodensystems (Titanate, Zirkonate und Wismutate), das die Zubereitung eines Gemisches, das sich aus entsprechenden Oxiden und Karbonaten zusammensetzt, die Trocknung des angefallenen Gemisches und seine Wärmebehandlung bei Temperaturwerten von 1173 bis 1523 K mit anschließender Zerkleinerung des hergestellten Produktes bis zu den Teilchen mit einem Durchschnittsradius von 1,0 bis 1`5 $\mu$m, mit sekundärem Vermischen, Entwässern, Trocknung und Wärmebehandlung (Sinterung bis 12 Stunden bei hohen Temperaturwerten bis zum Anfallen des Fertigproduktes) vorsieht (unter Redaktion von H. Yanagida, "Tonkaya tekhnicheskaya keramika" - Technische Feinkeramik-, (Moskau), Metallurgia , 1986, S. 55-63).

Die genannten Verfahren zur Gewinnung zusammengesetzter Oxide sind wenigproduktiv, bestehen aus mehreren Stufen, verlangen eine lange Wärmebehandlung bei hohen Temperaturwerten.

Bekannt ist auch ein Verfahren zur Gewinnung von zusammengesetzten Oxiden auf der Grundlage von zwei Metallen der V. und 1.-II. Gruppen, insbesondere der Niobate und Tantalate der Akkali- oder Erdalkalimetallen, das das Vermischen einer Brennkomponente, als solche verwendet man ein Metall der V.Gruppe, und einer Oxidkomponente, als solche verwendet man ein Oxid des Metalls der V.Gruppe, und eines Oxydationsmittels, als solches verwendet man das Nitrat eines Alkali- oder Erdalkalimetalls, und die Wärmebehandlung des angefallenen Gemisches bis zum Anfallen des Fertigproduktes vorsieht, die man im Vakuum oder im Argon durchführt, indem man durch das Gemisch Strom bis zur kritischen Temperatur einer Wärmeexplosion durchfliessen läßt, dabei läßt man den Strom auch nach der Entzündung des Gemisches durchließen (SU, A, 994414).

Bei einer hohen Ausbeute an Endprodukt, daß in seiner Zusammensetzung eine Phase aufweist, hat das Verfahren eine Reihe von Nachteilen: es ist wenigproduktiv, langwierig (über 1 Stunde), das in diesem Verfahren gewonnene Fertigprodukt ist in seiner Korngrößenverteilung inhomogen infolge eines teilweisen Schmelzens in der Kontaktzone des Ausgangsgemisches mit den Elektroden, es hat auch einen niedrigen Reinheitsgrad des Produktes in der Kontaktzone.

Offenbarung der Erfindung

Der Erfindung liegt die Aufgabe zugrunde, eine verheinfachte Technologie zur Gewinnung zusammengesetzter Oxide zu entwickeln, das die Aufrechterhaltung einer hohen Ausbeute und des hohen Reinheitsgrades des Endproduktes gewähleistet.

Die Aufgabe wurde dadurch gelöst, daß im Verfahren zur Gewinnung zusammengesetzter Oxide auf der Grundlage von mindestens zwei Metallen der I.-VI. Gruppe des Periodensystem, das das Vermisches der Brenn- und Oxidkomponenten sowie des Oxydationsmittels, die Wärmebehandlung des zubereiteten Gemisches bis zum Anfallen des Endproduktes vorsieht, erfindungsgemäß.

- man als Brennkomponente mindestens ein Metall aus der I.- VI. Gruppe oder eine Legierung aus zwei Metallen der erwähnten Gruppen oder Hydrid eines der Metalle der I.-VI. Gruppe, oder ein Gemisch aus ihren Hydriden, oder ein Gemisch des Metalls und seines Hydrids, oder Gemisch eines Metalls und Hydrids eines ungleichnamigen Metalls einer der genannten Gruppen verwendet;
- man als Oxidkomponente Hydroxid eines Metalls der I. und/oder II. Gruppe und/oder Oxid mindestens eines Metalls der I.-VI. Gruppe verwendet;
- man als Oxydationsmittel eine Verbindung aus der Reihe: Peroxid eines Metalls der I. und/oder der II. Gruppe, Hyperoxid eines Metalls der I. Gruppe, Nitrat eines Metalls der I. und/oder der II. Gruppe, genommen getrennt oder im Gemisch, und/oder Bleiperoxid, oder Sauerstoff verwendet, wobei man die genannten Komponenten im Gemisch in einem Verhältnis nimmt, das die Gewinnung eines Endproduktes mit stöchiometrischer Zusammensetzung bewirkt, und man die Wärmebehandlung des zubereiteten Gemisches unter Zuhilfenahme der selbstverbreitenden Hochtemperatursynthese mit gerichteter Flammenführung im Sauerstoff oder in einem sauerstoffhaltigen Gasmedium durchführt.

Zweckmäßigerweise führt man dabei die Wärmebehandlung bei einem Druck von 0,1 bis 15,0 MPa durch.

Es wird empfohlen, als sauerstoffhaltiges Gasmedium ein Gemisch aus Sauerstoff mit 10 bis 90 Vol.% Argon oder ein Gemisch den Sauerstoffs mit 10 bis 90 Vol.% Stickstoff zu verwenden.

Für die Gewinnung zusammengesetzter Oxide auf der Grundlage der Metalle der I., II. und V. Gruppe wird dabei als Brennkomponente mindestens ein Metall aus der I., II. oder V. Gruppe und/oder ein Hydrid eines der Metalle der genannten Gruppen verwendet , als Oxidkomponente verwendet man Hydroxid eines Metalls der I. und/oder der II. Gruppe und/oder Oxid mindestens eines Metalls der I., II. oder V. Gruppe und als Oxydationsmittel eine Verbindung aus der Reihe: Peroxid, Hyperoxid, Nitrat eines Metalls der I. und/oder II. Gruppe und/oder Bleiperoxid; für die Gewinnung zusammengesetzter Oxide auf der Grundlage der Metalle der II. und III. Gruppe verwendet man als Brennkomponante ein Metall der II. und/oder der III. Gruppe, und/oder ein Hydrid dieses Metalls, und/oder eine Legierung der Metalle der II. und III. Gruppe, und als Oxidkomponente verwendet man eines der Oxide des Metalls der II. und/oder der III. Gruppe und als Oxydationsmittel verwendet man Sauerstoff; für die Gewinnung zusammengesetzter Oxide auf der Grundlage der Metalle der II,III. und IV. Gruppe verwendet man als Brennkomponente mindestens ein Metall aus der II., III. oder IV. Gruppe und/oder Hydrid eines Metalls der genannten Gruppen, als Oxidkomponente verwendet man Oxid beziehungsweise Hydroxid mindestens eines Metalls aus der II., III. oder IV. Gruppe, als Oxydationsmittel verwendet man eine Verbindung aus der Reihe: Peroxid und/oder Nitrat eines Metalls der II. Gruppe und/oder Bleiperoxid; für die Gewinnung zusammengestzter Oxide auf der Grundlage der Metalle der II., IV. und VI. Gruppe verwendet man als Brennkomponente mindestens ein Metall aus der II., IV oder VI. Gruppe oder Gemisch der Metalle der genannten Gruppen , als Oxidkomponente verwendet man Oxid mindestens eines Metalls aus der II., IV . oder VI. Gruppe, als Oxydationsmittel verwendet man Peroxid mindestens eines der Metalle der II. Gruppe und/oder Bleiperoxid; für die Gewinnung zusammengesetzter Oxide auf der Grundlage der Metalle der IV. und V. Gruppe verwendet man als Brennkomponete eines der Metalls der IV. und V. Gruppe und/oder Hydrid eines der Metalle der IV. Gruppe, als Oxidkomponente verwendet man Oxid eines Metalls der IV. und/oder V.Gruppe, als Oxydationsmittel verwendet man Sauerstoff.

Das erfindungsgemäße Verfahren ermöglicht es, zusammengesetzte Oxide nach einer vereinfachten Technologie mit hoher Ausbeute und hohem Reinheitsgrad des Endproduktes zu gewinnen.

Im Zusammenhang mit der Vereinfachung der Technologie

- verlangt das Verfahren keine großen Produktionsflächen, es ist einfach in apparativer Ausstattung und läßt sich leicht in der Industrie realisieren;
- weist das Verfahren eine hohe Leistung auf, ermöglicht es, in kurzer Zeit (von 1 bis 2 Stunden) mehrere Kilogramme eines hochwertigen Fertigproduktes zu gewinnen;
- verlangt das Verfahren keine großen Stromverbrauch, Verwendung von Edelmetallen und Hochtemperatur-Ausrüstungen.

Bei der Synthese von leichtflüchtigen zusammengesetzten Oxiden erfolgt die Prozeßführung mit dem Ziel der Aufrechterhaltung einer hohen Ausbeute in der Regel in geschlossenen Behältern bei einem Druck von 0,1 bis 15,0 MPa.

Die Verwendung von Hydriden, Hydroxiden oder Nitraten der entsprechenden Metalle als Brennkomponente ermöglicht es neben der Vereinfachung der Prozeßführung auch ein Fertigprodukt zu gewinnen, das in seiner Dispersionsverteilung mit einer Teilchengröße bis 100 $\mu$m homogen ist. Solches Produkt weist eine gute Sinterfähigkeit auf und kann für die Herstellung von Erzeugnissen im Warmsinterungsverfahren eingesetzt werden.

Im Bereich der Aufrechterhaltung der stöchiometrischen Zusammensetzung des Fertigproduktes mittels Veränderung des Verhältnisses der Ausgangskomponenten in fester Phase kann man die Bedingungen des Brennens (Synthesetemperatur) variieren und dadurch, beispielsweise, ein angeschmolzenes Produkt mit einer großer Dichte erhalten (0,5 bis 0,7, bezogen auf die Dichte der entsprechenden Einkristalle).

Solches Produkt ermöglicht es, die Ausbeute an den auf seiner Grundlage gezüchteten großen Monokristallen zu vergrößern sowie die Leistung der Anlagen für ihre Züchtung zu erhöhen.

Das als Oxydatiionsmittel zum Einsatz Kommende Peroxid beziehungsweise Hyperoxid stallen eine Quelle des reinen Sauerstoffs dar, der für die Oxydation von Ausgangsmetallen oder Hydriden sowie für die Bildung zusammengesetzter Oxide erforderlich ist.

Die Verwendung eines Gemisches aus Sauerstoff mit 10 bis 90 Vol.% Argon oder mit 10 bis 90 Vol.% Stickstoff als sauerstoffhaltiges Gasmedium ermöglicht es auch, den Reinheitsgrad des Endproduktes zu erhöhen.

Die im erfindungsgemäßen Verfahren genannten Brenn- und Oxidkomponenten sowie das Oxydationsmittel vermischt man in einem Verhältnis, das die Gewinnung des Endproduktes mit stöchiometrischer Zusammensetzung bewirkt. Die Veränderung des Verhältnisses der Ausgangskomponenten vermindert die Qualität des Produktes und seine Ausbeute infolge der Verletzung der Wärmeabgebefänigkeit des Prozesses, das heißt infolge der Nichteinhaltung der Synthesebedingungen Die Vergrößerung des Gehaltes an Brennkomponente (eines Metalls oder Hydrids) über die Menge hinaus, die für die Gewinnung des Endproduktes mit stöchiometrischer Zusammensetzung erforderlich ist, genauso wie die Verringerung des Gehaltes an Oxidkomponente und des an Oxydationsmittel führt zum stürmischen Brennen mit Emissionen, was das Produkt verunreinigt und seine Homogenität in Phasen- und Korngrößenverteilung verletzt.

Die Verringerung des Gehaltes an Brennkomponente oder, was das gleiche bedeutet, die Vergrößerung an Oxidkomponente und an Oxydationsmittel führen zur unvollständigen Umsetzung und zur Verschlechterung der Qualität des Fertigproduktes infolge seiner Verunreinigung mit Ausgangskomponenten.

Beste Ausführungsvariante der Erfindung

Man vermischt die Brenn- und Oxidkomponenten sowie das Oxydatonsmittel in einem Verhältnis, das die Gewinnung des Fertigproduktes mit stöchiometrischer Zusammensetzung gewährleistet, dann erfolgt die Wärmebehandlung des zubereiteten Gemisches unter Zuhilfenahme der selbstverbreitenden Hochtemperatursynthese mit gerichteter Flammenführung im Sauerstoff oder einem sauerstoffhaltigen Gasmedium bis zum Anfallen des Endproduktes. Das hergestellte Fertigprodukt wird mit Hilfe der chemischen und Spektralanalyse analysiert.

Als Brennkomponente verwendet man mindestens ein Metall aus der I.- VI. Gruppe, oder eine Legierung aus zwei Metallen der erwähnten Gruppen, oder Hydrid eines der Metalle aus der I.-VI. Gruppe, oder ein Gemisch aus ihren Hydriden, oder ein Gemisch eines Metalls und seines Hydrids, oder ein Gemisch aus einem Metall und einem Hydrid eines ungleichnamigen Metalls einer der genannten Gruppen.

Als Oxidkomponente verwendet man Hydroxid eines Metalls der I. und/oder der II. Gruppe und/oder Oxid mindestens eines der Metalle der I.-VI.Gruppe.

Als Oxydationsmittel verwendet man eine Verbindung aus der Reine: Peroxid eines Metalls der I. und/oder der II. Gruppe, Hyperoxid eines Metalls der I.Gruppe, Nitrat eines Metalls der I. und/oder der II. Gruppe, genommen getrennt oder im Gemisch, und/oder Bleiperoxid, oder Sauerstoff.

Dabei ist es wünschenswert die Wärmebehandlung bei einem Druck von 0,1 bis 15,0 MPa durchzuführen.

Es wird empfohlen, als sauerstoffhaltigen Gasmedium ein Gemisch des Sauerstoffs mit 10 bis 90 Vol.% Argon oder ein Gemisch des Sauerstoffs mit 10 bis 90 Vol.% Stickstoff zu verwenden.

Für die Gewinnung zusammengesetzter Oxide auf der Grundlage von Metallen, gewählt aus der I., II. und V. Gruppe wird dabei als Brennkomponente mindestens ein Metall aus der I., II, oder V. Gruppe und/oder Hydrid eines der Metalle der genannten Gruppen, als Oxidkomponente verwendet man Hydroxid eines Metalls der I. und/oder der II. Gruppe und/oder Oxid mindestens eines der Metalle der I., II. oder V. Gruppe und als Oxydationsmitel verwendet man eine Verbindung aus der Reihe: Peroxid, Hyperoxid, Nitrat eines Metalls der I. und/oder der II. Gruppe und/oder Bleiperoxid.

Für die Gewinnung zusammengesetzter Oxide auf der Grundlage von Metallen der II. und III. Gruppe wird als Brennkomponente ein Metall, gewählt aus der II. und/oder der III. Gruppe, und/oder Hydrid eines

4

Metalls der II. oder der III. Gruppe und/oder ein Legierung der Metalle der II. und III. Gruppe verwendet, als Oxidkomponente verwendet man eines der Metalloxide der genannten Gruppen, als Oxydationsmittel verwendet man Sauerstoff.

Für die Gewinnung zusammengesetzter Oxide auf der Grundlage von Metallen der II., III. und IV. Gruppe verwendet man als Brennkomponente mindestens ein Metall, gewählt aus der II., III. oder IV. Gruppe, und/oder Hydrid eines Metalls der genannten Gruppen, als Oxidkomponente verwendet man Oxid oder Hydroxid mindestens eines der Metalle der II., III. oder IV. Gruppe, als Oxydationsmittel verwendet man Peroxid und/oder Nitrat eines Metalls der II. Gruppe und/oder Bleiperoxid.

Für die Gewinnung zusammengesetzter Oxide auf der Grundlage von Metallen der II., IV. und VI. Gruppe verwendet man als Brennkomponente mindestens ein Metall, gewählt aus der II., IV. oder VI Gruppe, oder ein Gewisch der Metalle der genannten Gruppen, als Oxidkomponente verwendet man Oxid mindestens eines Metalls der II., IV. oder VI. Gruppe und als Oxydationsmittel verwendet man Peroxid mindestens eines der Metalle der II. Gruppe und/oder Bleiperoxid.

Für die Gewinnung zusammengesetzter Oxide auf der Grundlage von Metallen der IV. Gruppe und der V. Gruppe verwendet man als Brennkomponente eines der Metalle der IV. und der V. Gruppe und/oder Hydrid eines der Metalle der IV. Gruppe, als Oxidkomponente verwendet man Oxid eines Metalls der IV. und/oder V. Gruppe, als Oxydationsmittel verwendet man Sauerstoff.

Die Wärmebehandlung des zubereiteten Gemisches erfolgt unter Zuhilfenahme der selbstverbreitenden Hochtemperatursynthese mit gerichteter Flammenführung, indem man das Brennen des Gemisches durch lokale Zuführung eines kurzzeitigen Wärmeimpulses dem Gemisch initiiert. An der Stelle der Initiierung entsteht eine Synthesewelle, die sich in der Richtung verbreitet, die der Stelle der Anlegung des Wärmeimpulses entgegengesetzt ist. Die Zeit der Verbreitung einer Synthesewelle hängt von der Zusammensetzung des Gemisches, vom Druck und von der Zusammensetzung des sauerstoffhaltigen Mediums ab. Die Zeit des Durchlaufs der Synthesewelle beträgt 5 bis 60 Sekunden. Die Gesamtdauer der Synthese, einschließlich der Kühlung auf Raumtemperatur, beträgt, beispielsweise, bei Aufgabe des Gemisches in einer Menge von 3 kg, nicht mehr als eine Stunde.

Nachstehend werden Beispiele für die Realisierung des Verfahrens angeführt, die das Wesen der Erfindung nicht erschöpfen.

Beispiel 1

Man vermischt Pulver von Lithiumhydrid, Niob und Niobsoxids in einem Molverhältnis der Komponenten 2:1:0,5, was die Erreichung Gewinnung des Stöchiometrischen zusammengesetzten Oxids des Lithiumniobats folgender chemischer Formel $LiNbO_3$ gewährleistet. Das Schema der chemischen Reaktion kann in diesem Fall wie folgt ausgedrückt werden:

$$LiH + Nb + Nb_2O_5 + O_2 \rightarrow LiNbO_3 + H_2O.$$

Das hergestellte Gemisch unterbringt man in einen kontinuierlichen Reaktor. Im Reaktor wird eine Zündspirale aus Niobium montiert, die mit dem Ausgangsgemisch in Berührung ist. Dem Reaktor führt man Sauerstoff zu und die Wärmebehandlung des Gemisches erfolgt mit gerichteter Flammenführung, indem man das Brennen mit einem kurzzeitigen Wärmeimpuls initiiert Dabei beginnt zwischen den genannten Ausgangskomponenten die slebstverbreitenden Hochtemperatursynthese des Endproduktes.

Nach dem Durchlaufen der Brennwelle und nach der Abkühlung des Produktes bis 293 K erhält man das Endprodukt, Lithiumniobat Stöchiometrischer Zusammensetzung. Gesamtdauer der Synthese beträgt 1 Stunde, die Ausbeute an Lithiumniobat beträgt 99,8%. Der Gehalt an Grundstoff im Produkt beträgt nach den Ergebnissen der chemischen und der Spektralanalyse 99,999 Masse%. Dabei beträgt der Dispersitätsgrad des gewonnenen Lithiumniobats 60 $\mu$m.

Die übrigen Beispielse von 2 bis 12 zur Gewinnung von zusammengesetzten Oxiden auf der Grundlage von Metallen der I., der II. und V. Gruppe sind in Tabelle zusammengeführt. In allen Fällen beträgt die Ausbeute an Produkt über 99,5%, der Gehalt an Grundstoff beträgt nicht unter 99,99 Masse%. Für alle Beispiele, außer 11, übersteigt der Dispersitätsgrad des Endproduktes nicht 100 $\mu$m.

Beispiel 13

Man vermischt Magnesiumperoxid, das Pulver des Aluminiums und des Aluminiumoxids in einem Molverhältnis 0,66:0,67:1. Das hergestellte Gemisch unterbringt man in einem kontinuierlichen Reaktor und

EP 0 433 450 A1

das Initiieren der gerichteten Flammenführung erfolgt mit einem elektrischen Funken im Sauerstoff-Strom. Die Synthesewelle verbreitete sich im ganzen Volumen des Gemisches innerhalb von 5 Sekunden, das Gemisch läßt man im Reaktor weitere 30 Minuten zwecks Abkühlung bis 293 K stehen und das gewonnene Endprodukt holt man zur Untersuchung und Anwendung heraus. Die Ausbeute an Endprodukt des zusammengesetzten Oxids auf der Grundlage von Magnesium und Aluminium (Magnesiumaluminat mit Spinellstruktur) beträgt 99,7%, der Gehalt an Grundstoff beträgt 99,99 Masse%, die Dichte 0,5, bezogen auf die Dichte des entsprechenden Einkristalls.

Beispiele 14 und 15 zur Gewinnung eines zusammengesetzten Oxids auf der Grundlage der Metalle der II.-III. Gruppe sind in Tabelle angeführt.

Die Dichte der gewonnenen Endprodukte beträgt von 0,6 bis 0,7, bezogen auf die Dichte eines entsprechenden Einkristalls.

Beispiel 16

Man vermischt Yttriumhydrid, Aluminiumoxid und Yttriumoxid in einem Molverhältnis 2:2:1 und unterbringt man das hergestellte Gemisch in einem Reaktor. Das Brennen initiiert man im Sauerstoffstrom bei einer Temperatur des Gemisches, die der Raumtemperatur gleich ist (293 k). Das Initiieren erfolgt durch die Zuführung eines Wärmeimpulses einer Metallspirale. Das Brennen verbreitet sich von der Stelle der Impulszuführung in der Richtung, die der Stelle des Initiierens des Brennens entgegengesetzt ist, das heißt, daß man die Wärmebehandlung mit gerichteter Flammenführung durchführt. Nach dem Durchlauf der Verbrennungswelle und nach der Kühlung auf 293 K (in 30 bis 40 Minuten seit dem Moment des Initiierens) wird das hergestellte Produkt für die weitere Untersuchung und Anwendung herausgeholt. Das Endprodukt, Yttriumaluminat stellt ein weißes, in seinem ganzen Volumen homogens gesintertes poröses Material mit stöchiometrischer Zusammensetzung mit einem Gehalt an Grundstoff nicht unter 99,999 Masse%. Die Ausbeute beträgt ~99,8%.

Beispiele 17 bis 22 zur Gewinnung zusammengesetzter Oxide auf der Grundlage von Metallen der II., III. und IV. Gruppe sind in Tabelle aufgeführt. In allen Fällen ist die Ausbeute an Produkt hoch (von 99,6 bis 100%). mit einem Gehalt an Grundstoff nicht unter 99,999 Masse%. Für alle Endprodukte verändert sich die Dichte in einem Bereich von 0,5 bis 0,7, bezogen auf die Dichte der entsprechenden Einkristalle.

Beispiel 23

Man vermischt Bariumperoxid, Titanhydrid und Titanoxid bei einem Molverhältnis 2:1:1. Das Gemisch initiiert man in einem Reaktor im sauerstoffhaltigen Gasmedium, das sich aus Sauerstoff /60 Vol.%/ und Argon /40 Vol.%/ zusammensetzt, bei einem Druck von 8 MPa. Die Ausbeute an Bariumtitanat ($BaTiO_3$) betragt 99,8% , der Gehalt an Grundstoff beträgt 99,999 Masse%.

Beispiele 24 bis 32 zur Gewinnung von zusammengesetzten Oxiden auf der Grundlage von Metallen der II., IV. und VI. Gruppe sind in Tabelle angeführt, dabei stellen die gemäß Beispielen 24 bis 28 gewonnenen Produkte Pulver mit einem Dispersitätsgrad nicht über 100 $\mu$m.

Beispiel 33

Man vermischt Titanhydrid, Wismutoxid und Titanoxid bei einem Molverhältnis 1:2:2 und unterbringt man das hergestellte Gemisch in einen Reaktor. Die ausgerichtete Flammenführung initiiert man im Sauerstoffstrom. Die Ausbaute an Produkt, Wismuttitanat, beträgt 99,7%, der Gehalt an Grundstoff beträgt 99,99 Masse%. Dabei beträgt der Dispersitätsgrad des Endproduktes 80 $\mu$m.

Beispiele 34 und 35 zur Gewinnung zusammengesetzter Oxide auf der Grundlage von Metallen der IV. und V. Gruppe sind in Tabelle angeführt. Dabei beträgt die Dichte des Endproduktes von 0,5 bis 0,7, bezogen auf die Dichte der entsprechenden Einkristalle.

Gewerbliche Anwendbarkeit

Die vorliegende Erfindung kann, beispielsweise, in der elektrotechnischen und radioelektronischen Industrie, im Juweliergewerbe und in der Lasertechnik ihre Anwendung finden.

| lfd. Nr. | Endprodukt | Zusammensetzung des Ausgangsgemisches | | |
|---|---|---|---|---|
| | | Brennkom- ponente | Oxidkompo- nente | Oxydati- onsmittel |
| 1 | 2 | 3 | 4 | 5 |
| 1 | $LiNbO_3$ | $LiH, Nb$ | $Nb_2O_5$ | $O_2$ |
| 2 | $LiTaO_3$ | $Li, TaH$ | $Ta_2O_5$ | $O_2$ |
| 3 | $LiNbO_3$ | $Nb, NbH$ | $Nb_2O_5$ | $Li_2O_2, O_2$ |
| 4 | $NaNbO_3$ | $NbH$ | $Nb_2O_5$ | $Na_2O_2, O_2$ |
| 5 | $KVO_3$ | $VH$ | $V_2O_5$ | $NO_2$ |
| 6 | $BaNb_2O_6$ | $BaH_2$ | $Nb_2O_5, BaO$ | $O_2$ |
| 7 | $PbNb_2O_6$ | $NbH$ | $Nb_2O_5$ | $PbC_2$ |
| 8 | $NaBa_2Nb_5O_{15}$ | $NbH$ | $Nb_2O_5$ | $Na_2O_2, BaO_2$ |
| 9 | $NaTaO_3$ | $NaH$ | $Ta_2O_5, NaOH$ | $O_2$ |
| 10 | $BaTa_2O_6$ | $TaH$ | $Ta_2O_5, Ba(OH)_2$ | $Ba(NO_3)_2, O_2$ |
| 11 | $BaCuO_2$ | $Cu$ | $CuO$ | $BaO_2$ |
| 12 | $BaCuO_2$ | $BaH_2$ | $CaO, BaO$ | $O_2$ |
| 13 | $MgAl_2O_4$ | $Al$ | $Al_2O_3$ | $MgO_2, O_2$ |
| 14 | $BaAl_2O_4$ | $Al$ | $Al_2O_3$ | $BaO_2, O_2$ |
| 15 | $MgAlO_4$ | $MgAl(сплав)$ | $Al_2O_3, MgO$ | $O_2$ |
| 16 | $VAlO_3$ | $VH_2$ | $Al_2O_3, V_2O_3$ | $O_2$ |
| 17 | $V_3Al_5O_{12}$ | $VH_2, Al$ | $Al_2O_3, V_2O_3$ | $O_2$ |
| 18 | $Nd_3Al_5O_{12}$ | $NdH_2$ | $Al_2O_3, Nd_2O_3$ | $O_2$ |
| 19 | $Dy_3Al_5O_{12}$ | $DyH_2$ | $Al_2O_3, Dy_2O_3$ | $O_2$ |
| 20 | $Gd_3Ga_5O_{12}$ | $GdH_2$ | $GaO_2, Gd_2O_3$ | $O_2$ |
| 21 | $Mg_2TiO_4$ | $TiH_2$ | $TiH_2$ | $MgO_2, O_2$ |
| 22 | $TiAl_2O_5$ | $TiH_2$ | $TiO_2, Al_2O_3$ | $O_2$ |
| 23 | $BaTiO_3$ | $TiH_2$ | $TiO_2$ | $BaO_2, O_2$ |
| 24 | $BaZrO_3$ | $ZrH_2$ | $ZrO_2, Ba(OH)_2$ | $O_2$ |

Fortsetzung der Tabelle

| I | 2 | 3 | 4 | 5 |
|---|---|---|---|---|
| 25 | $PbZrO_3$ | $ZrH_2$ | $ZrO_2$ | $PbO_2, O_2$ |
| 26 | $PbTiO_3-PbZrO_3$ | $ZrH_2, Ti$ | $TiO_2, ZrO_2$ | $PbO_2, O_2$ |
| 27 | $BaTiO_3-PbTiO_3$ | $TiH_2$ | $TiO_2$ | $BaO_2, PbO_2$ |
| 28 | $SrTiO_3$ | $TiH_2$ | $TiO_2$ | $Sr(NO_3)_2$ |
| 29 | $PbMoO_4$ | $Mo$ | $MoO_3$ | $PbO_2, O_2$ |
| 30 | $BaMoO_4$ | $Mo$ | $MoO_3$ | $BaO_2, O_2$ |
| 3I | $SrMoO_4$ | $Mo$ | $MoO_3$ | $SrO_2, O_2$ |
| 32 | $PbWO_4$ | $W$ | $WO_3$ | $PbO_2$ |
| 33 | $Bi_4Ti_3O_{12}$ | $TiH_2$ | $Bi_2O_3, TiO_2$ | $O_2$ |
| 34 | $Bi_4Ge_3O_{12}$ | $Ge, Bi$ | $Bi_2O_3, GeO_2$ | $O_2$ |
| 35 | $Bi_4Si_3O_{12}$ | $Si, Bi$ | $Bi_2O_3, SiO_2$ | $O_2$ |

Fortsetzung der Tabelle

| Verhältnis der Komponenten | | | Gasmedium, Vol.% | Druck des Gasmediums, MPa | Ausbeute an Endprodukt, % | Gehalt an Grundstoff im Produkt, Masse% |
|---|---|---|---|---|---|---|
| Brennkomponente | Oxidkomponente | Oxydationsmittel | | | | |
| 6 | 7 | 8 | 9 | 10 | 11 | 12 |
| I. 2 : I | 0,5 | – | Sauerstoff | Strom | 99,8 | 99,999 |
| 2. 2 : I | 0,5 | – | Sauerstoff | 0,5 | 99,5 | 99,999 |
| 3. I : I | 4 | 5 | Luft | 0,I | 99,5 | 99,999 |
| 4. I : I | 4 | 5 | Luft | I,0 | 99,5 | 99,999 |
| 5. I | I | 3 | Luft | I5 | 99,5 | 99,99 |
| 6. I | 2:I | – | Sauerstoff+Argon (I0+90) | Strom | 99,5 | 99,99 |
| 7. I | I,5 | 2 | Luft | 0,I | 99,5 | 99,99 |
| 8. I | 2 | 0,5:2 | Luft | 0,I | 99,5 | 99,999 |
| 9. I | I:3 | – | Sauerstoff | Strom | 99,5 | 99,999 |
| I0. 2 | I:I | I | Sauerstoff | 0,08 | 99,5 | 99,99 |
| II. I,5 | 0,5 | 2 | Sauerstoff | Strom | 99,5 | 99,99 |
| I2. 0,5 | 2:I,5 | – | Sauerstoff | Strom | 99,5 | 99,99 |
| I3. 0,66 | 0,67 | I | Sauerstoff | Strom | 99,7 | 99,99 |
| I4. 0,66 | 0,67 | I | Sauerstoff | I5 | 99,7 | 99,99 |
| 15 I : I | I,5:I | – | Sauerstoff | Strom | 99,7 | 99,99 |
| 16 2 | 2:I | – | Sauerstoff | Strom | 99,6 | 99,999 |
| 17 I : I,5 | I,75:I | – | Sauerstoff+Argon (90+I0) | Strom | 99,6 | 99,999 |

Fortsetzung der Tabelle

| I | 6 | 7 | 8 | 9 | | I0 | II | I2 |
|---|---|---|---|---|---|---|---|---|
| I8. | I | 2,5:I | – | Sauerstoff+ Argon (60+40) | Strom | | 99,8 | 99,999 |
| I9. | I | 2,5:I | – | Sauerstoff+ Argon (50+50) | Strom | | 99,9 | 99,999 |
| 20. | 2 | 5:0,5 | | Sauerstoff+ Stickstoff (60+40) | Strom | | 99,7 | 99,999 |
| 2I. | 0,8 | 0,2 | 2 | Sauerstoff | Strom | | 99,8 | 99,999 |
| 22. | 0,6 | 0,4 | 2 | Sauerstoff | Strom | | 99,7 | 99,999 |
| 23. | I - | I | 2 | Sauerstoff + Argon (60+40) | | 3 | 99,8 | 99,99 |
| 24. | I | I | 2 | Sauerstoff | | 0,5 | 99,7 | 99,99 |
| 25. | I | I | 2 | Sauerstoff+ Stickstoff (90+I0) | Strom | | 99,8 | 99,99 |
| 26. | I:I | I:I | 4 | Sauerstoff | Strom | | 99,8 | 99,99 |
| 27. | I | I | I:I | Sauerstoff | Strom | | 99,8 | 99,99 |
| 28. | I | I | 2 | Sauerstoff | Strom | | 99,8 | 99,99 |
| 29. | I | I | 2 | Sauerstoff | | I0 | 99,8 | 99,99 |
| 30. | I | I | 2 | Sauerstoff+ Stickstoff (40+60) | | I5 | 99,8 | 99,99 |
| 3I. | I,5 | 0,5 | 2 | Sauerstoff | Strom | | 99,9 | 99,99 |
| 32. | I,5 | 0,5 | 2 | Sauerstoff | | 5 | 99,8 | 99,99 |
| 33. | I | 2:2 | – | Sauerstoff | Strom | | 99,7 | 99,999 |
| 34. | 2:2 | I:I | – | Sauerstoff | | I | 99,7 | 99,999 |
| 35. | 2:2 | I:I | – | Sauerstoff | Strom | | 99,7 | 99,999 |

## Ansprüche

1. Verfahren zur Gewinnung von zusammengesetzten Oxiden auf der Grundlage von mindestens zwei Metallen der I.- VI. Gruppe des Periodensystems, das das Vermischen einer Brenn und einer Oxidkomponente sowie eines Oxydationsmittels mit anschließender Wärmebehandlung des hergestellten Gemisches bis zum Anfallen eines Endproduktes vorsieht, **dadurch gekennzeichnet,** daß man als Brennkomponente mindestens ein Metall, gewählt aus der I. oder VI. Gruppe oder Hydrid eines der Metalle der I. - VI. Gruppe oder eine Legierung aus zwei Metallen der erwähnten Gruppen, oder ein Gemisch ihrer Hydride, oder ein Gemisch eines Metalls und seines Hydrids, oder ein Gemisch eines Metalls und Hydrids eines ungleichnamigen Metalls einer der genannten Gruppen verwendet, als Oxidkomponente Hydroxid eines Metalls der I. und/oder der II. Gruppe und/oder Oxid mindestens eines der Metalle der I. - VI. Gruppe verwendet und als Oxydationsmittel eine Verbindung aus der Reihe: Peroxid eines Metalls der I. und/oder der II. Gruppe, Hyperoxid eines Metalls der I. Gruppe, Nitrat eines Metalls der I. und/oder der II. Gruppe, die getrennt oder im Gemisch genommen werden, und/oder Bleiperoxid,oder Sauerstoff verwendet, wobei man die genannten Komponenten des Gemisches in einem Verhältnis nimmt, das die Gewinnung des Endproduktes mit stöchiometrischer Zusammensetzung gewährleistet, und man die Wärmebehandlung des zubereiteten Gemisches unter Zuhilfenahme der selbstverbreitenden Hochtemperatursynthese mit gerichteter Flammenführung im Sauerstoff beziehungsweise in einem sauerstoffhaltigen Gasmedium durchführt.

2.  Verfahren nach Anspruch 1, **dadurch gekennzeichnet**, daß man die Wärmebehandlung bei einem Druck von 0,1 bis 15,0 MPa durchführt.

3.  Verfahren nach Anspruch 1 , **dadurch gekennzeichnet,** daß man als sauerstoffhaltiges Gasmedium ein Gemisch aus Sauerstoff mit 10 bis 90 Vol.% Argon oder ein Gemisch aus Sauerstoff mit 10 bis 90 Vol.% Stickstoff verwendet.

4.  Verfahren nach Anspruch 1, **dadurch gekennzeichnet,** daß man für die Gewinnung zusammengesetzter Oxide auf der Grundlage von Metallen der I., II. und V. Gruppe als Brennkomponente mindestens ein Metall aus der I., II. oder V. Gruppe und/oder Hydrid eines der Metalle der genannten Gruppe verwendet, als Oxidkomponente Hydroxid eines Metalls der I. und/oder II. Gruppe und/oder Oxid mindestens eines der Metalle der I., II. oder V. Gruppe verwendet und als Oxydationsmittel eine Verbindung aus der Reihe: Peroxid, Hyperoxid, Nitrat eines Metalls der I. Gruppe und/oder der II. Gruppe und/oder Bleiperoxid verwendet.

5.  Verfahren nach Anspruch 1, **dadurch gekennzeichnet,** daß man für die Gewinnung zusammengesetzter Oxide auf der Grundlage von Metallen der II. und der III. Gruppe als Brennkomponente ein Metall der II. und/oder der III. Gruppe und/oder Hydrid dieses Metalls, und/oder eine Legierung der Metalle der II. und III. Gruppe verwendet, als Oxidkomponente eines der Oxide eines Metalls der II. und/oder der III. Gruppe verwendet und als Oxydationsmittel Sauerstoff verwendet.

6.  Verfahren nach Anspruch 1, **dadurch gekennzeichnet,** daß man für die Gewinnung zusammengesetzter Oxide auf der Grundlage von Metallen der II., III. und IV. Gruppe als Brennkomponente mindestens ein Metall aus der II., III. oder IV. Gruppe und/oder Hydrid eines Metalls der genannten Gruppen verwendet, als Oxidkomponente Oxyd oder Hydroxid mindestens eines Metalls aus der II., III. oder IV. Gruppe verwendet und als Oxydationsmittel eine Verbindung aus der Reihe: Peroxid und/oder Nitrat eines Metalls der II. Gruppe und/oder Bleiperoxid verwendet.

7.  Verfahren nach Anspruch 1, **dadurch gekennzeichnet,** daß man für die Gewinnung zusammengesetzter Oxide auf der Grundlage von Metallen der II., IV. und VI. Gruppe als Brennkomponente mindestens ein Metall aus der II., IV. oder VI. Gruppe oder ein Gemisch der Pulver der Metalle der genannten Gruppen verwendet, man als Oxidkomponente Oxid mindestens eines Metalls aus der II., IV. oder VI. Gruppe verwendet und als Oxydationsmittel Peroxid mindestens eines Metalls der II. Gruppe und/oder Bleiperoxid verwendet.

8.  Verfahren nach Anspruch 1, **dadurch gekennzeichnet,** daß man für die Gewinnung zusammengesetzter Oxide auf der Grundlage von Metallen der IV. und V. Gruppe als Brennkomponente eines der Metalle der IV. und der V. Gruppe und/oder Hydrid eines der Metalle der IV. Gruppe verwendet und als Oxidkomponente Oxid eines Metalls der IV. und/oder der V. Gruppe und als Oxydationsmittel Sauerstoff verwendet.

# INTERNATIONAL SEARCH REPORT

International Application No   PCT/SU 89/00081

**I. CLASSIFICATION OF SUBJECT MATTER** (if several classification symbols apply, indicate all) ⁴

According to International Patent Classification (IPC) or to both National Classification and IPC

Int. Cl.⁵   C 01 B 13/14, C 01 G 1/02

**II. FIELDS SEARCHED**

| Minimum Documentation Searched ⁷ | |
|---|---|
| Classification System · | Classification Symbols |

Int. Cl.⁴   C 01 B 13/14, C 01 G 1/00, 1/02

Documentation Searched other than Minimum Documentation
to the Extent that such Documents are Included in the Fields Searched ⁸

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| A | SU, A1, 806610 (Institut Obschei i neorganicheskoi khimii im. N.S. Kurnakova AN SSSR), 23 February 1981 (23.02.81), the claims | 1,3 |
| A | GB, B, 1125995 (Deutsche Gold-und Silber-Scheide-anstalt Vormals Roessler) 5 September 1968 (05.09.68), the claims | 1,3 |
| A | SU, A1, 150953 (N.N. Smaga et al.) 27 September 1962 (27.09.62), the claims | 1 |
| A | GB, A, 1112187 (Canadian Patents & Development Ltd) 1 May 1968 (01.05.68), the claims | 1 |

---

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 2 November 1989 (02.11.89) | 15 December 1989 (15.12.89) |
| International Searching Authority | Signature of Authorized Officer |
| ISA/SU | |